# EUROPÄISCHE PATENTSCHRIFT

(11) **EP 1 102 979 B1**
(45) Veröffentlichungstag und Bekanntmachung des Hinweises auf die Patenterteilung: **13.10.2004**
(21) Anmeldenummer: 99927786.6
(22) Anmeldetag: 28.05.1999
(51) Int. Cl.: G01N 22/04, G01N 27/22

(54) **FEUCHTESENSOR FÜR SCHICHTEN**
MOISTURE SENSOR FOR LAYERS
DETECTEUR D'HUMIDITE POUR COUCHES

(30) Priorität: 24.07.1998 DE 19833331
(43) Veröffentlichungstag der Anmeldung: 30.05.2001
(73) Patentinhaber: Forschungszentrum Karlsruhe GmbH, 76133 Karlsruhe (DE)
(72) Erfinder: BRANDELIK, Alexander, D-76227 Karlsruhe (DE); HÜBNER, Christof, D-68535 Edingen-Neckarhausen (DE)
(86) Internationale Anmeldenummer: PCT/EP1999/003704
(87) Internationale Veröffentlichungsnummer: WO 2000/006998

(56) Entgegenhaltungen:
- EP-A- 0 342 013
- DE-A- 4 213 070
- US-A- 3 824 460
- US-A- 3 965 416
- US-A- 5 073 756
- US-A- 5 648 724
- KENT M ET AL: "Broadband measurement of stripline moisture sensors" JOURNAL OF MICROWAVE POWER, SEPT. 1984, CANADA, Bd. 19, Nr. 3, Seiten 173-179, XP002118888 ISSN: 0022-2739
- BRANDELIK A ET AL: "Advanced ground truth for snow and glacier sensing" IGARSS '98. SENSING AND MANAGING THE ENVIRONMENT. 1998 IEEE INTERNATIONAL GEOSCIENCE AND REMOTE SENSING. SYMPOSIUM PROCEEDINGS. (CAT. NO.98CH36174), IGARSS '98. SENSING AND MANAGING THE ENVIRONMENT. 1998 IEEE INTERNATIONAL GEOSCIENCE AND REMOTE SENSI, Seiten 1873-1875 vol.4, XP002118889 1998, New York, NY, USA, IEEE, USA ISBN: 0-7803-4403-0

## Beschreibung

Die Erfindung betrifft einen Feuchtesensor für Schichten nach dem Oberbegriff des Patentanspruchs 1.

Für viele Anwendungen ist es wichtig den Wassergehalt in dünnen Materialschichten die aus einer Mischung von nicht metallischem Feststoff, Wasser und Luft bestehen zu bestimmen. Dünn ist eine Schicht dann, wenn sie von einer Rolle abwickelbar und auf eine nicht ebene Fläche auslegbar ist, und aber wesentlich dicker ist als das größte, zerkleinerte Feststoffelement, das sich in der Mischung mit Wasser und Luft befindet.

Besonders wichtige Repräsentanten für diese Objekte sind geosynthetische Lehm oder Bentonit Matten. Der Sammelbegriff für diese Materialien ist Geosynthetic (Clay) Liners. Diese Matten, die eine typische Dicke von ca. 4 mm bis 20 haben, finden bevorzugte Verwendung als Feuchte- und Gasisolation in Dichtungen von Deponiebasen und/oder -oberflächen, Regenrückhaltebecken, Teichen, Talsperren, Unterwasserverlegungen, Dämmen und im allgemeinen Tief- und Hochbau. Diese Matten behalten ihre Isolationsfähigkeit wenn sie nicht austrocknen. Um der Austrocknung rechtzeitig vorzubeugen, benötigt man die ständige Messung der Mattenfeuchte allein ohne den Einfluß der Konstruktionsmaterialien ober- und unterhalb der Matte. Es ist üblich das nur eine Seite der Matte mit Wasser versorgt wird. In diesen Fällen kann ein starker Wassergehaltsgradient in der Mattendicke ohne Qualitätsverlust der Isolation herrschen. Das hat zur Folge, daß man innerhalb der Matte noch Feuchtegehaltunterschiede messen muß.

Der Konferenzbeitrag, Measuring the In-situ Moisture Content of Geosynthetic Clay Liners (GCLs) Using Time Domain Reflectometry; Matthew A. Eberle and Kent P. von Maubeuge, in 1998 Sixth International Conference on Geosynthetics, 25-29 March 1998, Atlanta, USA gibt den Stand der Technik von heute ausreichend wieder. Die Signallaufzeit wird entlang eines elektrischen Leiters, der in das messende Material eingestochen ist, gemessen. Die so gewonnene Zeit hängt von dem dielektrischen Koeffizienten DK des messenden Materials ab, wobei dieser Koeffizient seinerseits von dem Wassergehalt abhängt.

Die Probleme und Nachteile des dort beschriebenen Versuchs sind:
a) Das messende elektrische Feld ragt aus der Schichtdicke heraus, und somit die Materialien unter- und oberhalb der Matte die Meßwerte verfälschend beeinflussen.
b) Es ist schwierig, die Meßelektroden der Sonde gut in die Mitte der Matte zu stechen.
c) Die Stechsonde kann nur eine kurze, d.h. wenig repräsentative Strecke erfassen, weil sie nicht flexibel ist, um der meistens unebenen Schicht zu folgen.
d) Es ist bekannt, daß Luftblasen und eventuelle Luftspalten zwischen Sonde und Material, die beim Einstecken der Sonde unvermeidbar entstehen, den Meßwert nachhaltig und mit der Zeit unterschiedlich verfälschen.
e) Die dort dargestellte Meßkurve des Meßimpulses zeigt, daß die Bestimmung der Pulslaufzeit, die in Verbindung mit dem Wassergehalt gebracht wird, unsicher ist, weil die Dämpfung entlang der Meßelektrode zu groß ist und weil eine zu große und unkontrollierte Fehlanpassung der Impedanzen zwischen Sonde und Meßgerät herrscht.

Diese Probleme und Nachteile begründen, daß noch keine routinemäßig einsetzbare Meßsonde für diese Aufgabe kommerziell erhältlich ist.

Zur Beschreibung des Wetters gehören die Berichte über den Frostzustand des Bodens und über die Vereisung von bodennahen Objekten. Der Wetterdienst bedarf automatischer Vereisungssensoren, die zwischen den Zuständen trocken, feucht und vereist unterscheiden. Der Deutsche Wetterdienst DWD erfaßt zur Zeit diese Zustände durch subjektive Beobachtung. Diese Methode soll abgelöst werden.

Die Machbarkeitsstudie Intelligenter Sensor zur Messung des Bodenzustandes-Vereisungsmelder erstellt von STS Systemtechnik Schwerin GmbH im Auftrag des DWD, Hamburg, 1997 beschreibt einen Vorschlag in dem die Schallausbreitung (Geschwindigkeit und Reflexion) in einem Feststoff, der entweder trocken ist oder mit einer Schicht von Wasser oder Eis belegt ist, gemessen wird. Weil die Schallimpedanzen der drei Zuständen wie 3,2 zu 4 und zu 1,5 stehen, braucht man eine verhältnismäßig aufwendige Instrumentierung um diese Unterscheidung ausnutzen zu können. Das Gerät wird zu teuer.

Die Firma Vaisala TMI Ltd, 349 Bristol Road, Birmingham B 5 7SW, UK vertreibt ein Meßsystem für die Straßenzustandmeldung unter dem Namen IceCast Ice Prediction Systems. Dessen Sonde mißt unterschiedliche Parametern, wie elektrische Leitfähigkeit, Polarisation, DK, Temperatur der Straßenoberfläche je nach Zustand. Aus diesen vielen Daten errechnet man die Voraussage einer Vereisungsgefahr. Das System ist kompliziert und sehr teuer. Das Gerät ist nicht geeignet für die Messung der bodennahen Vereisung. Dem gegenüber ist unsere Aufgabe nur den aktuellen Zustand der Bodenoberfläche und die Vereisung von bodennahen Objekten anzugeben.

Die Firma Boschung Verkehrstechnik GmbH, Lützowgasse 14, A-1140 Wien, vertreibt ein Meßsystem ebenfalls für die Straßenzustandvorhersage. Dieses System ist auch kompliziert. Es wendet unter anderem Unterkühlung und Heizung eines isolierten Bodenelements mit Peltier-elementen an. Auch dieses System ist ungeeignet für die Messung der bodennahen Vereisung.

Die Dokumente US 3824460 und EP 342013 offenbaren Sensoren, die im wesentlischen dem Oberbegriff des Anspruchs 1 entsprechen.

Aufgabe der Erfindung ist es, einen Sensor der e. g. Art so auszugestalten, daß die Feuchtemessung von außen erfolgen kann.

Gelöst wird die erste Aufgabe durch die Merkmale des Patentanspruchs 1. Die Unteransprüche beschreiben vorteilhafte Ausgestaltungen der Erfindung. Die Ansprüche 5 und 7 nennen vorteilhafte Verwendungen des Sensors.

Die erfindungsgemäße Sonde hat folgende Vorteile:
a) Die Elektroden sind flexibel. Die Sonde kann auf eine weitgehend unebene Fläche eines messenden Materials, wie ein flexibeles Flachbandkabel, aufliegen.
b) Die Elektroden der Sonde sind mit einer elektrischen Isolationschicht ummantelt und in einem konstanten Abstand zu einander gehalten, wodurch die elektrische Dämpfung entlang der Elektroden klein wird. Die kleine Dämpfung ermöglicht den Bau einer längeren Sonde, die ein repräsentativeres Ergebnis liefert. Die endliche Dicke der Isolationschicht ermöglicht, daß das elektrische Feld der Elektroden ohne einen direkten Kurzschluß, oder ohne zu große Reduzierung der Meßempfindlichkeit, auf einer Seite der Sonde durch eine Metallabschirmschicht von dem benachbarten Raum abgeschirmt wird. Die Sonde wird nur einseitig empfindlich. Auf dieser Weise wird auch erreicht, daß die Sonde nicht mehr in das Material gestochen werden muß. Sie kann aufgelegt werden. Schon bei einem kleinen Auflagedruck wird ein verfälschender Luftspalt zwischen Sonde und Material vermieden.
c) Mit der Optimierung des Abstandes zwischen den Elektroden und der Dicke der Isolationschicht kann die Sonde auf die Dicke des messenden Materials bei guter Impedanzanpassung zwischen Sonde und Meßgerät eingestellt werden. Bei Bedarf, oder Zweifel an der Eindringstiefe des Meßfeldes, kann man das einseitige Meßfeld noch auf die Dicke des Materials beschränken. Man bedeckt, wie der Patentanspruch 8 beschreibt, das Material auch oberhalb mit einer metallischen Folie.
d) Um die äußeren elektrischen Störungen zu reduzieren, verwendet man, üblicher Weise, die Dreileiterschaltung .(Siehe den Bericht von Eberle und v. Meubeuge, wie oben.) Wenn man erfindungsgemäß die mittlere Elektrode der Dreileiter-Schaltung aus den benachbarnten Leitern von zwei parallel laufenden Elektrodenpaaren bildet, hat man einen weiteren freien Parameter, den Abstand zwischen den Elektrodenpaaren. Mit der Wahl dieses Abstands kann man die Impedanz der Sondenanordnung für bessere Anpassung beeinflussen.

Der Feuchtesensor für Schichten wird zum Vereisungsdetektor dadurch, daß anstelle des messenden Materialschicht ein poröse wasserspeichernde Materialschicht eingesetzt wird. Die poröse Materialschicht soll aus nicht metallischen Material mit niedrigem Dielektrizitätskoeffizienten DK und mit sehr kleinen Volumenanteil in einer Schicht von ca. 5 bis 20 mm dick sein. Filtermatten aus Polyesterfasern mit einem Flächengewicht von 300 g/m² mit einer Dicke von 20 mm haben sich bewährt. Die Luftporen der Schicht sollen so klein sein, daß die Regentropfen durch die Oberflächenspannung des Wassers in den Poren nach unten kriechen können aber in der Schicht festgehalten bleiben. Der DK der Schicht in trockenem Zustand wird nur vernachlässigbar größer sein als 1, der DK der Luft. Beim Regen wird eine Wasserschicht in diesem porösen Material entstehen. Der DK des Schicht wird dann ca. 80 sein, der DK des Wassers. Bei Temperaturen unter der Frostgrenze wandelt sich das Wasser in Eis um. Dadurch wird der DK der Schicht ca, 3,15 sein, der DK des Eises. Die Verdunstung aus der Matte wird nur vernachlässigbar verzögert gegenüber der Verdunstung von der freien Fläche.

Die hier beschriebene Lösung nutzt die Unterschiede der DK-en der obigen Zuständen, (trocken, feucht, vereist) die sich, wie die Zahlen 1 zu 80 und zu 3,15 unterscheiden. Diese größere Dynamik läßt eine einfachere Instrumentierung zu, als die oben berichteten bekannten Lösungen. Von zwei Feuchtesensoren als Vereisungsdetektor wird ein auf dem Boden liegen, während der zweite in der bodennahen Luft ausgespannt wird. Auf dieser Weise kann man die Vereisung am Boden von der Vereisung in der bodennahen Luft unterscheiden.

Die Erfindung wird anhand eines Ausführungsbeispiels mit Hilfe der Figuren näher erläutert.

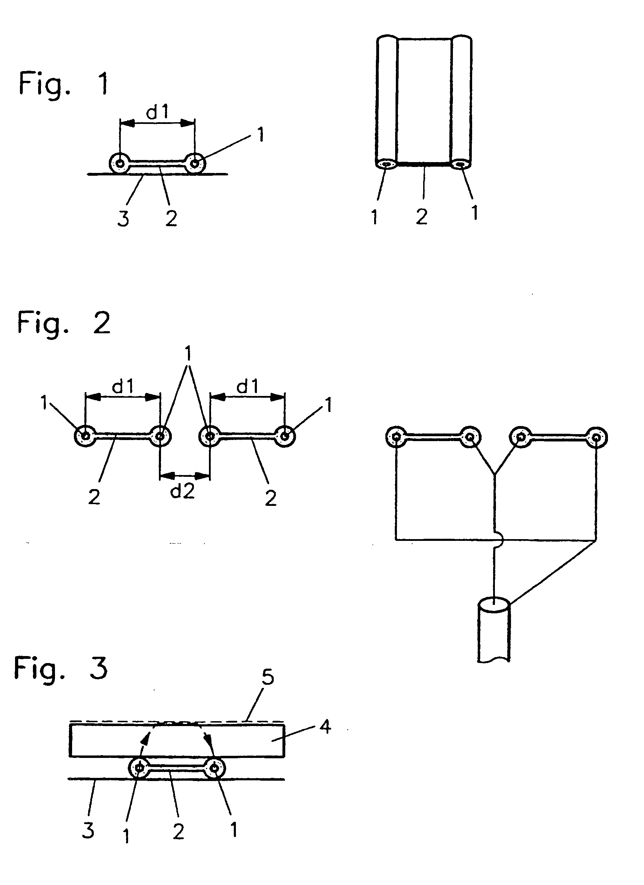

Die Figuren 1 bis 3 zeigen schematisch drei verschiedene Sensoren, wobei nur Figur 2 eine Ausführungsform des erfindungsgemässen Sensors zeigt.

Figur 1 zeigt einen Sensor mit zwei Elektroden 1 als zweiadriges Flachbandkabel. Die Isolationschicht 2 umhüllt die Leiterbahnen 1 und bildet einen durchgehenden Abstandshalter zwischen den Leiterbahnen 1. Eine Metallabschirmschicht 3 schirmt das elektrische Meßfeld gegen den darunterliegenden Raum ab. Mit der Wahl der Abstand d1 wird die meßbare Schichtdicke des messenden Materials 4 bestimmt. Rechts daneben ist eine Draufsicht dargestellt.

Figur 2 zeigt die erfindungsgemässe Gestaltung der Sonde in einer Dreileiterschaltung aus zwei parallel laufenden Sensoren. Auch mit der Wahl der Abstand d2 kann man die Impedanzanpassung des Sensors zu dem Meßgrät vorteilhaft beeinflussen. Rechts daneben ist die Verschaltung der vier Leiterbahnen 1 dargestellt.

Figur 3 zeigt auf der zu messenden Schich 4 eine wasserdurchlässige Metallschicht 5 mit der das elektrische Feld (Meßfeld) auf die Schicht beschränkt wird.

Mit Hilfe von Kalibrationsmessungen werden die gemessenen Dielektrizitätskoeffizienten zu Wassergehalten zugeordnet.

Wenn der Sensor für Schichten zur Detektierung der Vereisung eingesetzt wird, dann werden die Dielektrizitätskoeffizienten in Bereichen zu den Zuständen trocken, feucht und vereist zugeordnet.

Eine Ausführungsform des Sensors mit zwei Stegleitungen ist ca. 60 mm breit und 700 mm lang und ca. 1,5 mm dick. Bei einem d1 von 15mm und einem d2 von 20 mm mißt er auf Gewicht bezogene Wassergehalte in dem Bereich von 10 % bis 150% mit einer Genauigkeit von ca. ± 5%, auch in hoch verdichtetem Bentonit. Die Metallabschirmschicht ist ein Aluminium kaschiertes Klebeband. Der Sensor ist in Dreileitertechnik gebaut.

Für den Einsatz als Vereisungsdetektor wird eine Filtermatte aus Polyesterfasern mit einem Flächengewicht von 300 g/m² und mit einer Dicke von 20 mm benutzt.

Das abgeschirmte Zuleitungskabel zwischen Sensor und Meßgerät kann 20 m lang sein. Das Messgerät (in der Figur nicht dargestellt) dient der DK- Messung.

## Patentansprüche

1. Feuchtesensor für Schichten bestehend aus mindestens zwei parallelen elektrischen Leitern, einem Zuleitungskabel und einem Meßgerät zum Erfassen von Dielektrizitätskoeffizienten,wobei beide elektrischen Leiter mit einer Isolierschicht umgeben sind und auf der der Schicht abgewandten Seite zur Abschirmung des Halbraumes von einer Metallabschirmschicht bedeckt sind,**dadurch gekennzeichnet, daß**
a) zwischen den beiden Leitern (1) ein weiterer Leiter (1) mit Isolierschicht liegt, wobei die Leiter in Dreileitertechnik verschaltet sind, wobei
b) der in der Mitte liegende Leiter (1) aus zwei benachbarten Leitern (1) von zwei nebeneinanderliegenden Doppelleitern gebildet wird, wobei durch den Abstand dieser Doppelleiter die Impedanz des Leitersystems eingestellt wird.

2. Feuchtesensor nach Anspruch 1, **dadurch gekennzeichnet, daß** die Leiter (1) mit Isolierschicht (2) und die Metallabschirmschicht (3) flexibel sind.

3. Feuchtesensor nach Anspruch, 1 oder 2, **dadurch gekennzeichnet, daß** der Abstand der Leiter (1) so gewählt ist, daß die Eindringtiefe des Meßfeldes mit der Dicke der zu messenden Schicht (4) vergleichbar ist.

4. Feuchtesensor nach einem der Ansprüche 1 bis 3, **dadurch gekennzeichnet, daß** der Wellenwiderstand der Leitungen (1) mit Isolierschichten (2) und Metallabschirmschicht (3) im Zustand der Messung an den charakteristischen Widerstand des Meßgerätes (5) angepaßt ist.

5. Verwendung des Feuchtesensors gemäß einem der Ansprüche 1 bis 4 zur Feuchtebestimmung in Bentonit- Schichten.

6. Verwendung des Feuchtesensors gemäß Anspruch 5, wobei sich auf der zu messenden Bentonit- Schicht (4) eine wasserdurchlässige Metallschicht (5) befindet

7. Verwendung des Feuchtesensors gemäß Anspruch 4 zur Messung der Vereisung des Bodens und bodennaher Objekte, wobei die Objekte aus einem porösen, wasserspeicherndem Material bestehen.

## Claims

1. Humidity sensor for layers that consists of at least two parallel electric conductors, a feed cable, and a device measuring the dielectricity coefficients, with both electric conductors being covered by an overall insulating coating and a metal shielding of the half-space on the side turned away from the layer to be measured, **characterized by**
a) an additional conductor (1) with an insulating layer being located between both conductors (1), with these conductors being connected in three-wire technology, and
b) the conductor in the center (1) of two adjacent conductors (1) being formed by two twin conductors that are located side by side, with the distance of these twin conductors determining the impedance of the conductor system.

2. Humidity sensor according to Claim 1, **characterized by** the conductors (1) with the insulating layer (2) and the metal shielding layer (3) being flexible.

3. Humidity sensor according to Claim 1 or 2, **characterized by** the distance of the conductors (1) being selected such that the penetration depth of the measurement field is comparable with the thickness of the layer to be measured (4).

4. Humidity sensor according to one of Claims 1 through 3, **characterized by** the characteristic impedance of the conductors (1) with the insulating (2) and metal shielding layers (3) being adapted to the characteristic resistance of the measurement device (5) during measurement.

5. Use of the humidity sensor according to one of Claims 1 through 4 for the determination of the humidity content of bentonite layers.

6. Use of the humidity sensor according to Claim 5, with the bentonite layer (4) to be measured being covered by a water-permeable metal layer (5).

7. Use of the humidity sensor according to Claim 4 for measuring the icing of the soil and close-to-ground objects, with these objects consisting of a porous, water-storing material.

## Revendications

1. Capteur d'humidité pour des couches, composé d'au moins deux conducteurs électriques parallèles, d'un câble d'alimentation et d'un appareil de mesure pour enregistrer des coefficients diélectriques, les deux conducteurs électriques étant entourés d'une couche isolante et couverts d'une couche de blindage métallique sur la face opposée à la couche, pour protéger le demi-espace, **caractérisé en ce que**
a) entre les deux conducteurs (1) se trouve un autre conducteur (1) muni d'une couche isolante, les conducteurs étant connectés en mode à trois fils, où
b) le conducteur placé au centre est formé par deux conducteurs voisins (1) de deux doubles conducteurs juxtaposés, l'impédance du système conducteur étant réglée par la distance de ces doubles conducteurs.

2. Capteur d'humidité selon la revendication 1, **caractérisé en ce que** les conducteurs (1) à couche isolante (2) et la couche de blindage métallique (3) sont flexibles.

3. Capteur d'humidité selon l'une quelconque des revendications 1 ou 2, **caractérisé en ce que** la distance des conducteurs (1) est choisie de telle façon que la profondeur de pénétration du champ de mesure est comparable à l'épaissauer de la couche à mesurer (4).

4. Capteur d'humidité selon l'une quelconque des revendications 1 à 3, **caractérisé en ce qu'**à l'état de la mesure, l'impédance caractéristique d'onde des conducteurs (1) aux couches isolantes (2) et à couche de blindage métallique (3) est adaptée à la résistance caractéristique de l'appareil de mesure.

5. Utilisation du capteur d'humidité selon l'une quelconque des revendications 1 à 4 pour la détermination de l'humidité dans des couches de bentonite.

6. Utilisation du capteur d'humidité selon la revendication 5, une couche métallique perméable à l'eau (5) se trouvant sur la couche de bentonite (4) à mesurer.

7. Utilisation du capteur d'humidité selon la revendication 4 pour la mesure du gel du sol et d'objets proches du sol, les objets étant constitués d'un matériau poreux, accumulant de l'eau.
